Europäisches Patentamt

European Patent Office

Office européen des brevets

(19)

(11) **EP 1 255 398 A2**

(12) **EUROPÄISCHE PATENTANMELDUNG**

(43) Veröffentlichungstag:
06.11.2002 Patentblatt 2002/45

(51) Int Cl.[7]: **H04M 9/08**

(21) Anmeldenummer: 02360122.2

(22) Anmeldetag: **15.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.04.2001 DE 10119277**

(71) Anmelder: **ALCATEL**
**75008 Paris (FR)**

(72) Erfinder: **Walker, Michael**
**73666 Baltmannsweiler 2 (DE)**

(74) Vertreter: **Rausch, Gabriele, Dr. et al**
**Alcatel**
**Intellectual Property Department, Stuttgart**
**70430 Stuttgart (DE)**

(54) **Verfahren zur Maskierung von Geräuschmodulationen und Störgeräuschen bei der Sprachübertragung**

(57)  Bei der Echokompensation in Telekommunikationsnetzen mit nichtlinearen Übertagungsfunktionen tritt der Effekt auf, dass mit den Echos auch die Geräusche wesentlich stärker gedämpft werden als in den echofreien Zeitabschnitten. Das führt zu störenden hörbaren Geräuschmodulationen. Um eine natürlich klingende Sprachübertragung zu erreichen, werden abhängig vom aktuell geschätzten Geräusch in den Sprachpausen in den Zeitabschnitten, in denen Echos kompensiert worden sind, synthetische, ggf. spektral bewertete Geräusche in die Geräuschlücken eingefügt. Durch einen Gewichtungsfaktor wird der zeitliche Verlauf des eingefügten Geräuschs bestimmt, so dass somit das Hörempfinden des menschlichen Ohres berücksichtigt werden kann und ein geräuschloses Einfügen des Geräuschs erreicht wird.

Fig. 2

EP 1 255 398 A2

**Beschreibung**

Die Erfindung betrifft ein Verfahren, mit dem eine Verbesserung der natürlichen Sprachübertragung in Telekommunikationssystemen erreicht wird. In diesen Telekommunikationssystemen werden bei der Sprachübertragung störende Echos erzeugt. So treten bei Telekommunikationsendgeräten mit Freisprecheinrichtungen Echos durch akustische Kopplung vom Lautsprecher zum Mikrofon auf, so dass ein Teil des Empfangssignals vom Lautsprecher über die Luftstrecke und gegebenenfalls ein Gehäuse zum Mikrofon und somit zum Sprecher auf der entfernten Seite des Telekommunikationssystems gelangt. Diese Echos werden als akustische Echos bezeichnet. Weiterhin treten sogenannte Leitungsechos auf, die durch Fehlanpassung der 2 Draht/4 Draht-Wandler erzeugt werden, die am Übergang der zweidrähtigen analogen Schaltungstechnik zur vierdrähtigen digitalen Schaltungstechnik der Telekommunikationssysteme eingesetzt werden.

Wenn eine eindeutige Korrelation zwischen gesendetem Signal und empfangenem Echo besteht, werden Echos durch Einsatz von adaptiven FIR- (Finite Impulse Response) Filtern kompensiert, vgl. DE-A-44 30 189. Diese Methode versagt jedoch beispielsweise in der Mobilfunktechnik, bei der Audio/Video-Codecs und Verschlüsselungsalgorithmen eingesetzt werden, weil durch die Kodierungs- und Dekodierungsvorgänge der Sprache die Korrelation zwischen gesendetem Signal und empfangenem Echo nicht mehr besteht und somit nichtlineare Übertragungsfunktionen vom Sender zum Empfänger und umgekehrt entstehen. Ferner können Nichtlinearitäten, wie sie zum Beispiel durch die Vibration eines Telekommunikationsendgerätes, die durch den Lautsprecher angeregt wird, entstehen. In diesen Fällen ist für die Echokompensation der Einsatz von Verarbeitungseinheiten mit nichtlinearen Funktionen (Non Linear Process-NLP) erforderlich. Eine intelligente wirtschaftliche nichtlineare Funktion lässt sich zum Beispiel mit einem Kompander realisieren, vgl. DE-A-196 11 548. Die Verwendung von nichtlinearen Verfahren für die Echokompensation führt aber dazu, dass in Zeitabschnitten, in denen Echos auftreten, mit den Echos die Geräusche wesentlich stärker abgesetzt werden als in den echofreien Zeitabschnitten, so dass bei geräuschbehafteten Signalen hörbare und damit störende Geräuschmodulationen auftreten.

Daraus resultiert die Aufgabe, bei geräuschbehafteter Signalübertragung in den Echozeitabschnitten nach der Echokompensation ein Geräusch derart einzufügen, dass Störgeräusche und Geräuschmodulationen vermieden werden.

Diese Aufgabe wird durch das im ersten Patentanspruch beschriebene Verfahren und die im sechsten Anspruch beschriebene Schaltungsanordnung gelöst.

Das Wesen der Erfindung besteht darin, dass nach Schätzung eines Geräuschpegels in den Sprachpausen in den Echozeitabschnitten ein Geräusch hinzugefügt wird, so dass durch dieses geräuschlose Einblenden eines Geräuschs eine natürlich klingende Sprachübertragung erreicht wird und in den Sprachpausen eine Geräuschmodulation unterbleibt.

Die Erfindung wird nunmehr an einem Ausführungsbeispiel näher erläutert. In der dazugehörigen Zeichnung zeigen:

Fig. 1    ein Blockschaltbild der erfindungsgemäßen Schaltungsanordnung,

Fig. 2    ein Blockschaltbild mit den erfindungswesentlichen Funktionseinheiten,

Fig. 3    eine Darstellung des Verlaufs der Geräuschunterdrückung als Funktion des Geräusch-zuSprache-Verhältnisses und

Fig. 4    ein Blockschaltbild einer Variante der erfindungsgemäßen Schaltungsanordnung.

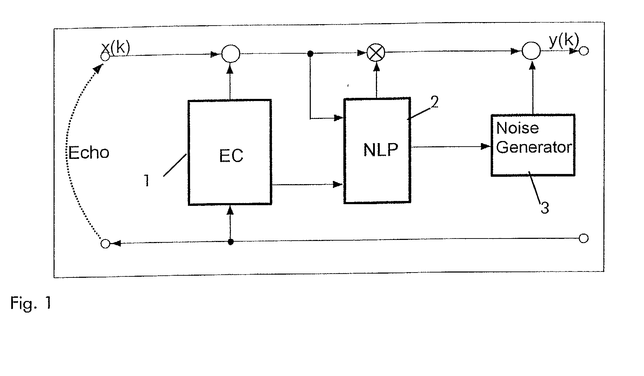

Gemäß Fig. 1 besteht die erfindungsgemäße Schaltungsanordnung aus einem Echokompensator 1, einer Verarbeitungseinheit mit einer nichtlinearen Funktion 2 und einem Geräuschgenerator 3. Diese Schaltungsanordnung wird in einen echobehafteten Kanal eingefügt. Von dem echobehafteten Signal x(k) wird durch den Echokompensator 1 das Echo im wesentlichen subtrahiert und mit der Verarbeitungseinheit mit nichtlinearer Funktion 2 werden die Restechos beseitigt. Mit den Restechos werden aber auch die Geräuschanteile des Signals sehr stark gedämpft, so dass dann im Signalverlauf eine störende Geräuschlücke entsteht. Diese Geräuschlücke wird durch ein vom Geräuschgenerator 3 geliefertes Geräusch aufgefüllt, wobei der Pegel des Geräuschs von der Verarbeitungseinheit mit nichtlinearer Funktion 2 gesteuert wird. Am Ausgang der Schaltungsanordnung entsteht dann ein echofreies und natürlich klingendes mit einem definierten Geräusch behaftetes Ausgangssignal y(k).

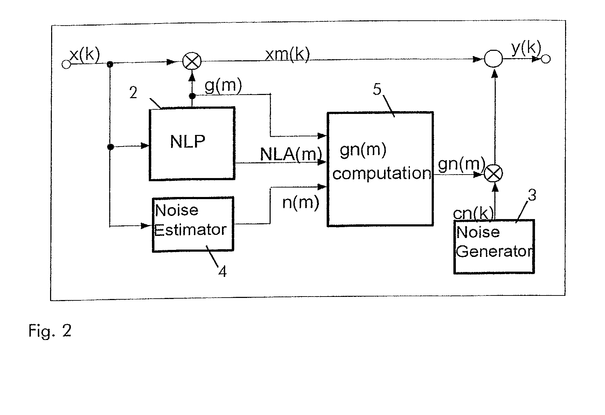

In dem in Fig. 2 dargestellten Blockschaltbild ist der Echokompensator 1 weggelassen, und es sind die Verarbeitungseinheit mit nichtlinearer Funktion 2, Geräuschgenerator 3, Geräuschpegelschätzer 4 und Recheneinheit 5 für einen Gewichtungsfaktor gn(m) dargestellt.

Der Gewichtungsfaktor gn(m) wird nach folgender Vorschrift ermittelt:

$$gn(m) \cong \left\{ \begin{array}{l} \text{if } (g(m) \geq NLG(m)) \\ n(m) \cdot \dfrac{NLG(m)}{g(m)} \\ \text{else } n(m) \end{array} \right\} \qquad (1)$$

In Fig. 2 und Gleichung (1) bedeuten:

k           Abtastzeitpunkt

m           Zeitpunkte der unterabgetasteten Werte

NLG(m)   Verstärkungswert (entspricht dem Dämpfungswert) der von der Verarbeitungseinheit mit nichtlinearer Funktion außerhalb des Echofensters, bei lokalem Geräusch geliefert wird. (NLG=Noise Level Gain)

NLA(m)   $\dfrac{1}{NLG(m)}$ Dämpfungswert der Verarbeitungseinheit mit nichtlinearer Funktion 2 bei lokalem Geräusch ohne Echo (NLA=Noise Level Attenuation)

g(m)       aktueller Verstärkungswert der Verarbeitungseinheit mit nichtlinearer Funktion

n(m)       geschätzter Geräuschpegel

x(k)        Abtastfolge des Eingangssignals

xm(k)      Abtastfolge des bei Sprache verstärkten oder des bei Echos gedämpften Eingangssignals

y(k)        Abtastfolge des Ausgangssignals

cn(k)      vom Geräuschgenerator 3 gelieferte Abtastfolge

Gleichung (1) beschreibt, dass der Gewichtungsfaktor gn(m) Werte zwischen $n(m)\frac{NLG(m)}{g(m)}$ und n(m) annehmen kann. Der Wert des Gewichtungsfaktors gn(m) bestimmt, welcher Anteil des vom Geräuschgenerator 3 gelieferten Geräuschs cn(k) einem echobefreiten und gegebenenfalls geräuschbedämpften Signal xm(k) hinzugefügt wird. In Zeitabschnitten, in denen Sprache übertragen wird, ist der von der Verarbeitungseinheit mit nichtlinearer Funktion 2 gelieferte Verstärkungswert g(m) sehr groß, siehe Gleichung (1).

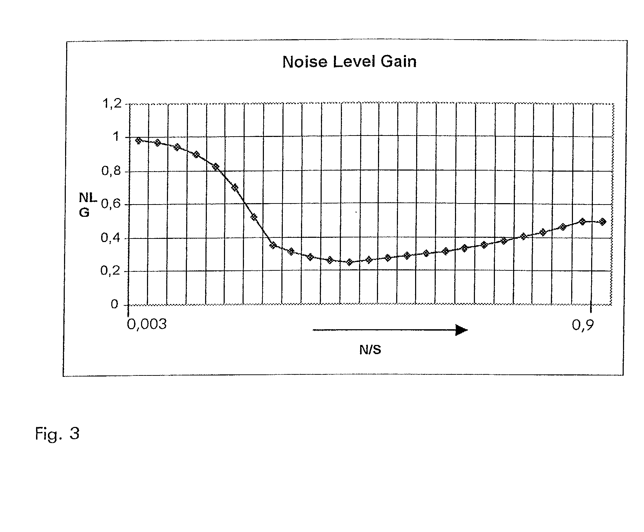

Bei nichtlinearen Funktionen mit Geräuschunterdrückung ist der aktuelle Verstärkungswert g(m) abhängig vom Grad der Geräuschunterdrückung und ist gleich dem Verstärkungswert NLG(m). Der Verstärkungswert NLG(m) kann sowohl ein fester Wert sein, als auch an den Signal-Störabstand S/N oder dessen Kehrwert N/S wie in Fig. 3 gezeigt adaptiert werden.

Bei g(m) ≥ NLG(m) wird der Gewichtungsfaktor gn(m) im wesentlichen von dem Quotienten $\frac{NLG(m)}{g(m)}$ bestimmt, wobei der geschätzte Geräuschpegel n(m) am Ausgang der Verarbeitungseinheit mit nichtlinearer Funktion 2 um diesen Quotienten vermindert wird, das heißt in Zeitabschnitten, in denen Sprache übertragen wird, wird dem Ausgangssignal kaum ein Geräusch hinzugefügt.

In den Zeitabschnitten, in denen ein Echo auftritt, wird die von der Verarbeitungseinheit mit nichtlinearer Funktion 2 gelieferte Verstärkungswert g(m) besonders klein, mit anderen Worten, die Dämpfung wird sehr groß, so dass mit dem Echo auch der Geräuschpegel stark gedämpft wird. Somit trifft die Ungleichung g(m) ≥ NLG(m) nicht mehr zu und der Gewichtungsfaktor gn(m) wird von dem vom Geräuschpegelschätzer 4 ermittelten Geräuschpegel n(m) bestimmt, der jeweils in den Sprachpausen geschätzt wurde. Der Übergang zwischen der lokalen Sprachaktivität und den Sprachpausen erfolgt somit kontinuierlich vom Sprachpegel gesteuert. In Sprachpausen ist damit schon ein synthetisches Geräusch vorhanden, das abhängig vom Dämpfungswert NLA(m) der Verarbeitungseinheit mit nichtlinearer Funktion 2 an den Signalstörabstand S/N oder an dessen Kehrwert N/S adaptiert werden kann.

So wird vorteilhafterweise der Gewichtungsfaktor gn(m) vom Verlauf der Funktion g(m) bestimmt, die durch die Verarbeitungseinheit mit nichtlinearer Funktion 2 derart realisiert wird, dass die nichtlinearen Übertragungseigenschaften des menschlichen Ohres berücksichtigt werden. Mit dieser Maßnahme wird die Massenträgheit des menschlichen Ohres nachgebildet, indem Änderungen des aktuellen Verstärkungswertes g(m) mit einer schnell ansteigenden Flanke und einer langsam abfallenden Flanke durchgeführt werden.

Eine weitere Verbesserung des Verfahrens wird erreicht, wenn der Verlauf der Geräuschunterdrückung NLG als Funktion des Geräusch N-/Sprach S-/Verhältnisses gemäß Fig. 3 berücksichtigt wird. Eine solche Funktion ist mit geringem Aufwand in der Verarbeitungseinheit mit nichtlinearer Funktion 2 implementierbar. Die in Fig. 3 dargestellte Funktion

$$NLG = f\left(\frac{N}{S}\right)$$

zeigt, dass bei geringem Geräusch N eine Geräuschabsenkung nicht erforderlich ist, der Verstärkungswert liegt bei 1. Mit zunehmendem Geräusch N muss auch die Geräuschabsenkung vergrößert werden. Die Funktion

$$NLG = f\left(\frac{N}{S}\right)$$

durchläuft ein Minimum, da bei sehr stark gestörter Sprache die Geräuschreduktion zurückgenommen werden muss, um überhaupt die Sprache vom Geräusch unterscheiden zu können. Durch diesen Funktionsverlauf wird die Geräuschreduktion an das natürliche Hörempfinden des menschlichen Ohres adaptiert, und die Verdeckungseffekte des menschlichen Ohres werden dabei berücksichtigt.

Es ist möglich, den Gewichtungsfaktor gn(m) nur dann zu berechnen, wenn eine Sprachpause vorliegt. Dazu muss die Schaltungsanordnung durch einen Sprachpausendetektor ergänzt werden. Der Gewichtungsfaktor gn(m) wird dann nach folgender Vorschrift ermittelt:

$$gn(m) = \begin{cases} \begin{cases} \text{if } (g(m) \geq NLG(m)) \\ n(m) \cdot \dfrac{NLG(m)}{g(m)} \\ \text{else } n(m) \end{cases} & \text{if speech pause (2)} \\ \text{else } 0 \end{cases}$$

Diese erfindungsgemäße Variante hat den Vorteil, dass während der Sprachintervalle kein zusätzliches Hinzufügen eines Geräuschs zum Ausgangssignal y(k) erfolgt.

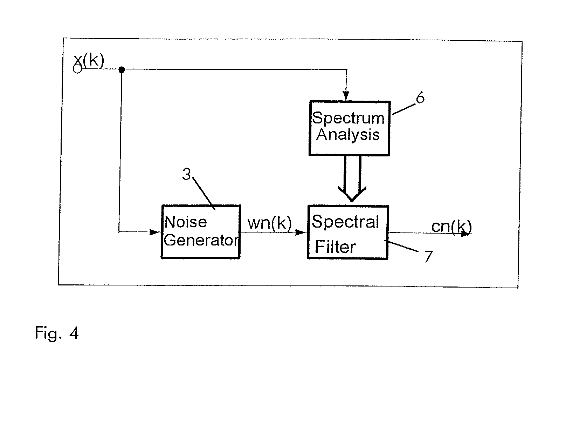

Um den natürlichen Spracheindruck weiter zu verbessern und den Unterschied zwischen natürlichem Umgebungsgeräusch und hinzugefügtem synthetischen Geräusch zu verringern, wird gemäß Fig. 4 das Ausgangssignal wn(k) des Geräuschgenerators 3 durch ein Filter 7 spektral gefiltert. Das Spektrum des Eingangssignals x(k) wird mit einem Spektralanalysator 6 analysiert, mit dessen Ausgangssignal das Spektralfilter 7 eingestellt wird. Somit ist es möglich, das synthetische Signal des Geräuschgenerators so weit zu optimieren, dass das natürliche Geräusch und das hinzugefügte Geräusch voneinander hörbar kaum zu unterscheiden sind. Damit bleiben natürliche Hintergrundgeräuschkulissen eines Sprechers, wie zum Beispiel Straßenlärm, Maschinengeräusche, Sportplatzatmosphäre oder Flugplatzlärm im wesentlichen erhalten.

Mit der Erfindung wird vorteilhafterweise ein geräuschloses Einblenden eines Geräuschs in Geräuschlücken eines Sprachsignals realisiert. Wegen der Unterabtastung bleibt der Rechenaufwand gering. Durch die Ausnutzung des nichtlinearen Zeitverhaltens der Verarbeitungseinheit mit nichtlinearer Funktion 2 ist es mit geringem Programmieraufwand möglich, die nichtlinearen Übertragungseigenschaften des menschlichen Ohres bei der Realisierung der Erfindung zu berücksichtigen.

So wir einerseits die störende Geräuschmodulation beseitigt und andererseits eine natürlich klingende Sprachübertragung gewährleistet.

**Patentansprüche**

1. Verfahren zur Maskierung von Geräuschmodulationen und Störgeräuschen in Sprachpausen bei der Sprachübertragung in Telekommunikationssystemen, in denen zur Unterdrückung von störenden Echos Echokompensatoren eingesetzt werden,
   **dadurch gekennzeichnet, dass**
   bei geräuschbehafteter Sprachübertragung während einer Sprachpause der Geräuschpegel (n(m)) geschätzt wird und dass in den Zeitabschnitten der Sprachpause, in denen Echos auftreten und die Echos und das Geräusch unterdrückt werden, ein von einem Geräuschgenerator (3) geliefertes Geräusch derart in die entstandene Echo- und Geräuschlücke eingefügt wird, dass der Pegel des eingefügten Geräuschs an den Geräuschpegel (n(m)) während der Sprachpause angeglichen wird.

2. Verfahren nach Anspruch 1, **dadurch gekennzeichnet, dass** in Telekommunikationssystemen, in denen keine Korrelation zwischen gesendetem Sprachsignal und empfangenem Echo besteht, zur Realisierung von Echounterdrückungsverfahren Kompander (1) und/oder eine Verarbeitungseinheit mit nichtlinearer Funktion (2) eingesetzt werden.

3. Verfahren nach Anspruch 1, **dadurch gekennzeichnet, dass** der Pegel des von dem Geräuschgenerator (3) gelieferten Geräuschs (cn(k)) in Abhängigkeit von dem geschätzten Geräuschpegel (n(m)) gemäß folgender Vorschrift eines Gewichtungsfaktors (gn(m)) berechnet wird:

$$gn(m) = \left\{ \begin{array}{l} \text{if } (g(m) \geq \text{NLG}(m)) \\ n(m) \cdot \dfrac{NLG(m)}{g(m)} \\ \text{else } n(m) \end{array} \right\}$$

m         Zeitpunkte der unterabgetasteten Werte

g(m)      aktueller Verstärkungswert einer Verarbeitungseinheit mit nichtlinearer Funktion

NLG(m)    Verstärkungswert, der von der Verarbeitungseinheit mit nichtlinearer Funktion außerhalb des Echofensters bei lokalem Geräusch geliefert wird

n(m)       geschätzter Geräuschpegel

4. Verfahren nach Anspruch 3, **dadurch gekennzeichnet, dass** der Gewichtungsfaktor (gn(m)) nur während einer Sprachpause berechnet wird.

5. Verfahren nach Anspruch 1, **dadurch gekennzeichnet, dass** das Spektrum des geräuschbehafteten Sprachsignals (x(k)) mit einem Spektralanalysator (6) analysiert wird, mit dessen Ausgangssignal ein Spektralfilter (7) eingestellt wird, mit dem dann das vom Geräuschgenerator (3) gelieferte Geräusch (wn(k)) gefiltert und dem Spektrum des geräuschbehafteten Sprachsignals (x(k)) angepasst wird.

6. Schaltungsanordnung zur Durchführung des Verfahrens **dadurch gekennzeichnet, dass** das geräuschbehaftete Sprachsignal (x(k)) an den Eingang einer Verarbeitungseinheit mit nichtlinearer Funktion (2) und an den Eingang eines Geräuschpegelschätzers (4) liegt, deren Ausgänge mit den Eingängen einer Recheneinheit (5) verbunden sind, deren Ausgang und der Ausgang des Geräuschgenerators (3) über ein Steuerglied mit der echo- und geräuschbereinigten sprachsignalführenden Leitung (y(k)) verbunden ist.

Fig. 1

Fig. 2

Fig. 3

Fig. 4